# EUROPÄISCHE PATENTSCHRIFT

(11) **EP 1 444 291 B1**
(45) Veröffentlichungstag und Bekanntmachung des Hinweises auf die Patenterteilung: **27.06.2007**
(21) Anmeldenummer: 02782904.3
(22) Anmeldetag: 15.10.2002
(51) Int. Cl.: C08J 3/05, C09J 101/26, C09J 103/08, C04B 28/00, C09D 5/34

(54) **STOFFMISCHUNG UND VERFAHREN ZUR EINBRINGUNG MINDESTENS EINER FEINSTTEILIGEN WIRKSTOFFKOMPONENTE IN EIN FLÜSSIGES WÄSSRIGES SYSTEM**
SUBSTANCE MIXTURE AND A METHOD FOR INTRODUCING AT LEAST ONE PARTICULATE ACTIVE INGREDIENT COMPONENT INTO A LIQUID AQUEOUS SYSTEM
MELANGE DE SUBSTANCES ET PROCEDE POUR INTRODUIRE AU MOINS UN COMPOSANT ACTIF EN FINES PARTICULES DANS UN SYSTEME AQUEUX LIQUIDE

(30) Priorität: 15.10.2001 DE 10150348
(43) Veröffentlichungstag der Anmeldung: 11.08.2004
(73) Patentinhaber: J. Rettenmaier & Söhne GmbH + Co. KG, 73494 Rosenberg (DE); Henkel KGaA, 40589 Düsseldorf (DE)
(72) Erfinder: HOLL, Martin, 73453 Abtsgmünd (DE); NIESS, Andreas, 73420 Aalen (DE); GÖTZ, Heinz, 73494 Rosenberg (DE); NEITZER, Klaus, 40595 Düsseldorf (DE); HOFFMANN, Heinz-Peter, 40789 Monheim (DE); SCHÖTTMER, Bernhard, 40789 Monheim (DE)
(74) Vertreter: Schumacher, Horst
(86) Internationale Anmeldenummer: PCT/EP2002/011482
(87) Internationale Veröffentlichungsnummer: WO 2003/033570

(56) Entgegenhaltungen:
- EP-A- 0 416 405
- EP-A- 0 686 666
- EP-A- 0 819 787
- DE-A- 3 103 338
- DE-A- 19 831 856
- DATABASE WPI Week 200122 Derwent Publications Ltd., London, GB; AN 2001-213718 XP002227757 "Fiber mixed nori-seaweed paste for sticking papers, kites, comprises fine paper pulp fibers and nori-seaweed starch paste" & JP 2001 019921 A (FUKUOKA), 23. Januar 2001 (2001-01-23)
- PATENT ABSTRACTS OF JAPAN vol. 1996, no. 02, 29. Februar 1996 (1996-02-29) & JP 07 267708 A (MATSUSHITA ELECTRIC WORKS LTD), 17. Oktober 1995 (1995-10-17)
- DATABASE CHEMABS [Online] Chemical Abstracts Service, Columbus, Ohio, US; "Paste for wallpapers" retrieved from STN Database accession no. 103:89269 XP002227755 & CS 216 494 B (CZECH.) 29. Oktober 1982 (1982-10-29)
- DATABASE CHEMABS [Online] Chemical Abstracts Service, Columbus, Ohio, US; "Admixtures for mortar" retrieved from STN Database accession no. 103:26352 XP002227756 & JP 60 042260 A (SANYO-KOKUSAKU PULP CO. LTD) 6. März 1985 (1985-03-06)

## Beschreibung

Die Erfindung bezieht sich auf eine Stoffmischung nach dem Oberbegriff des Anspruchs 1 und ein Verfahren nach dem Oberbegriff des Anspruchs 8.

Viele chemische Wirkstoffkomponenten, die zu anwendungsfertigen flüssigen Systemen verschiedener Viskositäten oder pastenartigen Massen weiterverarbeitet werden, liegen von der Herstellung her als Pulver, Puder, Mehl bis hin zu griessartigen Konfigurationen vor. Dies soll mit "feinstteilig" bezeichnet sein. Wegen der leichteren Handhabung und um vorzeitigen Reaktionen in der flüssigen oder feuchten Phase vorzubeugen, werden diese Stoffe in der feinstteiligen Form trocken gelagert und in den Handel gebracht. Bei der Anwendung werden die Stoffe in ein flüssiges wässriges System, meist Wasser, eingebracht und ergeben dann je nach Konzentration Mittel einer flüssigen bis teigigen Konsistenz, die meist flächig ausgebreitet werden und in dieser Form ihre Funktion entfalten. Beispiele hierfür sind Tapetenkleister, Verdikkungsmittel, Wandbelagsklebstoffe, Holzklebstoffe, zementäre Systeme wie Ausgleichsmassen und Fliesenkleber, Fußbodenbelagsklebstoffe, Spachtelmassen, Estrichsysteme.

Die Lagerung der feinstteiligen Wirkstoffkomponenten in trockener Form hat zwar gegenüber der Lagerung der gebrauchsfertigen Produkte Vorteile, jedoch auch Probleme, weil die Handhabung von feinstteiligen trockenen Wirkstoffkomponenten und ihre Dosierung nicht einfach sind und auch die Tendenz besteht, daß sich solche Wirkstoffkomponenten bei längerer Lagerzeit verfestigen und dann nicht mehr gleichmäßig rieselfähig sind. Die trockenen Zusammensetzungen der vorgenannten Kleister, Klebstoffe und Spachtelmassen haben in der Regel mehrere unterschiedliche Bestandteile, die unterschiedliche Teilchengröße, unterschiedliche Dichte und Oberflächenstruktur aufweisen, so daß es bei deren Konfektionierung in feinstteiliger Pulverform während der Lagerung zur Entmischung kommen kann, so daß bei der Entnahme von kleinen Portionen aus dem Gebinde nicht gewährleistet ist, daß in jeder Portion gleichbleibende Anteile jedes Bestandteils vorhanden sind. Auch ist das gleichmäßige Einbringen einer solchen feinstteiligen Wirkstoffkomponente in eine Flüssigkeit manchmal schwierig.

Der Erfindung liegt die Aufgabe zugrunde, Handhabung, Dosierung und Einbringen einer feinstteiligen Wirkstoffkomponente der angesprochenen Art zu verbessern und das Verbacken bzw. die Materialverfestigung bei längerer Lagerzeit zu vermeiden.

Diese Aufgabe wird durch die in Anspruch 1 wiedergegebene Erfindung gelöst.

Der Ausdruck "feinstückig" soll im Gegensatz zu "feinstteilig" größere Aggregate von 0,5 bis einigen Millimetern Durchmesser bezeichnen, die bei der Handhabung stabile Formkörper bilden und typischerweise z.B. als Pellet oder Granulat bezeichnet werden.

Für die Herstellung derartiger Pellets oder Granulate sind im Stand der Technik verschiedene Verfahren bekannt, z.B. die Herstellung von Pellets durch Strangpressen und anschließendes Zerschneiden der Stränge, durch Pelletisieren mit Bindemitteln auf Pelletisiertellern oder die Herstellung von Granulat durch Kompaktierung zwischen Walzen und anschließendem Brechen des gewalzten Flächengebildes.

Die Überführung der Stoffmischung in eine derartige feinstückige Form erleichtert die Handhabung und die Dosierung und vermeidet den Eintritt von Materialverfestigung durch Zusammenbacken der Partikel bei längerer Lagerzeit. Bei derartigen Pellets oder Granulaten wird eine Entmischung der Materialkomponenten vermieden. Das Material bleibt schüttfähig oder sogar rieselfähig. Staubentwicklung bei der Handhabung wird vermieden.

Bei der Herstellung der feinstückigen Formkörper ist es vorteilhaft, mit einer möglichst geringen Druckbeaufschlagung insbesondere beim Kompaktieren zu arbeiten. Dies schont die Produktionsanlage und ist insbesondere für die anschließende Einbringung der Wirkstoffkomponente in die Flüssigkeit vorteilhaft. Je fester die feinstteiligen Wirkstoffkomponenten bei der Herstellung der feinstückigen Formkörper zusammengepreßt werden, desto schlechter lösen sich die Formkörper anschließend auf.

Hier setzt nun die eine Funktion der cellulosehaltigen Pflanzenfasern ein. Cellulosehaltige Fasern haben eine gewisse Fähigkeit zur Bindung aneinander durch die sogenannten Wasserstoffbrücken, die ihre Wirkung besonders auch bei der Herstellung von Papier entfalten. Diese Eigenschaft der cellulosehaltigen Pflanzenfasern gestattet es, bei der Herstellung der kleinstückigen Formkörper ausreichenden Zusammenhalts mit einem geringeren Kompressionsdruck auszukommen. Ein Teil der sonst durch die bloße Kompression erzeugten inneren Kohäsion der Partikel wird bei Anwesenheit von cellulosehaltigen Pflanzenfasern durch diese beigesteuert. Hierdurch kann ein gewisser Druckanteil "eingespart" werden.

Die mögliche Herabsetzung des spezifischen Preßdrucks bei der Herstellung von pelletisierten oder kompaktierten Stoffmischungen hat nicht nur eine Bedeutung bei der anschließenden Einbringung der feinstückigen Formkörper in flüssige bzw. wäßrige Systeme sondern auch bei solchen Stoffmischungen, die nur durch Scherkraft zerfallen. Auch dabei ist die Desintegration erleichtert. Je geringer die eingesetzte Vorverdichtungsarbeit, desto leichter die spätere Zurückführung in die feinstteilige Form.

Die zweite Funktion des Anteils an cellulosehaltigen Pflanzenfasern kommt zur Wirkung, wenn die feinstückigen Formkörper in die Flüssigkeit eingebracht werden. In wäßrigen Systemen bewirkt die cellulosehaltige Pflanzenfaser eine schnelle Wassereinleitung in die jeweilige zu einem feinstückigen Formkörper verdichtete Partikel entlang der cellulosehaltigen Pflanzenfasern. Die im Innern des feinstückigen Formkörpers vorliegenden weiteren cellulosehaltigen Pflanzenfasern bilden eine Art Netzwerk und sorgen über Kapillarkräfte für eine schnelle und gleichmäßige Verteilung des Wassers durch den ganzen Formkörper hindurch, was allein schon die Desintegration einleitet. Das an den Grenzen der feinstteiligen Wirkstoffkomponenten und der cellulosehaltigen Pflanzenfasern vordringende Wasser bewirkt außerdem eine geringfügige Quellung der cellulosehaltigen Pflanzenfasern, die je nach den Eigenschaften der Stoffmischung ein Anquellen des ganzen feinstückigen Formkörpers oder eine Mikrorißbildung in demselben zur Folge hat. Jedenfalls wird das Gefüge der feinstückigen Formkörper aufgelockert und für die Freigabe der feinstteiligen Wirkstoffkomponenten vorbereitet.

Die cellulosehaltigen Pflanzenfasern können diese Wirkungen im Sinne der Erfindung besonders gut entfalten, da sie chemisch oder physikalisch nach dem TMP-Verfahren, dem CTMP-Verfahren oder dem EFC-Verfahren (Extraktionsarme Cellulose) vorbehandelt sind, was ihnen den Zusammenhalt in feinstückiger Form, aber auch das Vordringen des Wassers in das Innere der feinstückigen Partikel erleichtert.

Das TMP-Verfahren bedeutet eine Zerfaserung von Holzschnitzeln unter Dampfdruck, das CTMP-Verfahren das gleiche unter der Verwendung von Chemikalien (s. RÖMPP Chemie Lexikon 9. Auflage, Georg Thieme Verlag Stuttgart; New York (1995), Stichwort "Papier", Seite 3208, linke Spalte, Mitte). Das EFC-Verfahren bedeutet eine Behandlung von Holzpartikeln mit Lauge unter Atmosphärendruck (s. DE 197 10 315 C2). Mit derartigen Fasern, die durch die Behandlung eine besondere Oberflächenstruktrur erhalten haben, ist die Binde- und Sprengwirkung besonders ausgeprägt.

Eine gattungsgemäße Stoffmischung ist aus der DE 198 31 856 A1 bekannt. Hierbei geht es um Agglomerate, seien es Formteile oder Aggregate, zur Herstellung eines wässrigen Bindemittelsystems. Die Agglomerate enthalten mindestens ein hydrophiles Sprengmittel, welches eine fasrige Struktur aufweisen kann, z. B. mikrokristalline Cellulose.

Aus der DE-OS 199 53 867 A1 geht eine Zusammensetzung umfassend Stärke und cellulosehaltige Fasern hervor, bei der die Stärke und die Fasern aneinander fixiert sind. Die Zusammensetzung ist im Gebrauchszustand granuliert und eignet sich zur Herstellung von Formkörpern wie Verpackungen.

In dem vorgenannten Stand der Technik ist von irgendeiner Art der Vorbehandlung der cellulosehaltigen Fasern nicht die Rede.

Wichtig ist bei der Erfindung auch noch, daß die cellulosehaltigen Pflanzenfasern chemisch ziemlich inert sind und mit dem feinstteiligen Wirkstoffkomponenten oder eventuellen sonstigen Zusatzstoffen in der Stoffmischung keine chemischen Wechselwirkungen eingehen, die die gewünschten Wirkungen der Wirkstoffkomponenten beeinträchtigen oder verändern könnten.

Dies gilt besonders, wenn die cellulosehaltigen Pflanzenfasern im wesentlichen reine Cellulosefasern sind. Aber auch der Einsatz von Holzfasern ist nicht ausgeschlossen, wenn es nicht auf besondere sensorische Neutralität ankommt.

Gemäß Anspruch 2 können die cellulosehaltigen Pflanzenfasern in der Stoffmischung in einem Gewichtsanteil von 2 bis 18% zugegen sein, während gemäß Anspruch 3 die mittleren Faserlängen in Bereich von 20 bis 350 µm liegen sollten, um optimale Ergebnisse zu erzielen.

Gemäß Anspruch 4 kann die Stoffmischung einen Anteil an Zusatzstoffen enthalten, die die Wirkung der Wirkstoffkomponenten und/oder das Verhalten der Wirkstofflcomponenten in der Stoffmischung verbessern.

In den meisten Fällen wird das flüssige wässrige System Wasser sein (Anspruch 5).

Anspruch 6 gibt eine Reihe von Beispielen für die Wirkstoffkomponenten wieder.

Diese Stoffmischungen sind Bindemittelagglomerate. Sie enthalten Stoffe, die sich zur Herstellung von wäßrigen Bindemittelsystemen eignen. Unter einem wäßrigen Bindemittelsystem sind Lösungen oder Dispersionen zu verstehen, die zum Kleben, Dichten, Verfestigen oder allgemein zur Oberflächenbehandlung geeignet sind. Konkrete Beispiele für derartige Lösungen oder Dispersionen sind Kleister, insbesondere Tapetenkleister, Wandbelagsklebstoffe, Dispersionsklebstoffe, Ausgleichsmassen, Fliesenkleber, Estrichmassen, Spachtelmassen auf Zement- oder Gips-Basis, Fußbodenbelagsklebstoffe, Verdickungsmittel, Grundierungen für mineralische Untergründe und dergleichen.

Dabei sind Kleister für Tapeten in ihrem Bindemittelgehalt so eingestellt, daß sie für Papiergewicht bis 200 g/m² geeignet sind, während Klebstoffe für Wandbeläge für Papiergewichte von 200 bis zu 800 g/m² geeignet sind.

Die erfindungsgemäßen feinstückigen Bindemittelagglomerate müssen zum Erhalt eines gebrauchsfertigen Produkts, beispielsweise eines Kleisters, eines Dispersionsklebstoffs, eines Dichtmittels oder einer Grundierung für mineralische Untergründe, vom Anwender zunächst mit einer geeigneten Menge Wasser vermischt, d.h., darin aufgelöst oder darin dispergiert werden.

Die erfindungsgemäßen teilchenförmigen Bindemittelagglomerate enthalten in der Regel ein natürliches oder synthetisches Polysaccharid. Als natürliche oder synthetische Polysaccharide eignen sich beispielsweise Stärke oder Cellulose sowie deren durch geeignete Verfahren erhältliche, an einer oder mehreren OH-Gruppen substituierte Derivate.

Als Stärke oder als Basis der Stärkederivate eignen sich sämtliche Stärketypen wie Kartoffelstärke, Maisstärke, Weizenstärke, Reisstärke, Milostärke, Tapiokastärke oder Gemische aus zwei oder mehr der genannten Stärken und dergleichen. Im Rahmen einer bevorzugten Ausführungsform der vorliegenden Erfindung werden Stärke oder Stärkederivate auf Basis von Kartoffel- oder Maisstärke oder deren Gemische eingesetzt.

Die Stärke sollte wasserlöslich, eventuell zumindest wasserquellbar sein. Insbesondere ist im Rahmen der vorliegenden Erfindung modifizierte Stärke geeignet, wobei eine entsprechende Modifikation durch physikalische oder geringe chemische Einwirkung zustande kommt. Konkrete Beispiele für derartige Stärkederivate sind partiell abgebaute Stärke und Quellstärke.

Die Stärkederivate sollen insbesondere wasserlöslich bzw. zumindest wasserquellbar sein. In diesem Zusammenhang sind insbesondere Stärkeester oder Stärkeether geeignet, vor allem carboxylierte oder alkoxylierte Stärken. Als carboxylierte oder alkoxylierte Stärken eignen sich sämtliche entsprechend modifizierten, bereits oben genannte natürliche Stärketypen. Brauchbare Stärkederivate weisen einen Carboxylierungsgrad von etwa 0,1 bis etwa 2,0 oder Alkoxylierungsgrad von etwa 0,05 bis etwa 1,5 auf. Geeignete Stärkederivate können auch mit difunktionellen Verbindungen vernetzt sein, wie sie beispielsweise aus der EP-B 0 311 873 (Seite 3, Zeile 49 bis Seite 4, Zeile 5) bekannt sind.

Als Celluloseverbindungen eignen sich neben der natürlichen Cellulose insbesondere die Celluloseether. Geeignet sind beispielsweise Carboxymethylcellulose (CMC), Carboxymethylmethylcellulose (CMMC), Ethylcellulose (EC), Hydroxypropylcellulose (HPC), Hydroxypropylmethylcellulose (HPMC), Hydroxybutylcellulose (HBC), Hydroxybutylcellulose (HBMC), Hydroxyethylcellulose (HEC), Hydroxyethylcarboxymethylcellulose (HECMC), Hydroxyethylethylcellulose (HEEC), Hydropropylcarboxymethylcellulose (HPCMC), Hydroxypropylmethylcellulose (HPMC), Hydroxyethylmethylcellulose (HEMC), Methylhydroxyethylcellulose (MHEC), Methylhydroxylpropycellulose (MHPC), Methylhydroxyethylpropylcellulose (MHEPC), Methylcellulose (MC) und Propylcellulose (PC), wobei Carboxymethylcellulose, Methylcellulose, Methylhydroxycellulose und Methylhydroxypropylcellulose sowie Gemische aus zwei oder mehr davon sowie die Alkalisalze der CMC und die leicht ethoxylierte MC oder Gemische aus zwei oder mehr der genannten Verbindungen zugegen sein können.

Die genannten Cellulosederivate können leicht vernetzt sein, damit sie bei einem pH-Wert von über 8 löslich sind und die Lösung in Wasser verzögert wird. Die Vernetzung kann beispielsweise in bekannter Weise durch Glyoxal-Addition erfolgen.

Bei Tapetenkleistern überwiegt der Anteil der Celluloseether gegenüber den Stärkederivaten, bei den Wandbelagsklebstoffen überwiegt der Anteil der Stärkederivate über die Celluloseether.

Nach den beschriebenen Polysacchariden und deren Derivaten können die erfindungsgemäßen Bindemittelagglomerate noch synthetische Polymerisate enthalten.

Derartige synthetische Polymerisate werden beispielsweise zur Verstärkung der Klebkraft bzw. zur Verbesserung der Wasserfestigkeit eines unter Verwendung eines aus einem erfindungsgemäßen Bindemittelagglomerat erhältlichen Produkts erhaltenen Endprodukts eingesetzt. Als synthetische Polymerisate eignen sich im Rahmen der vorliegenden Erfindung insbesondere redispergierbare Dispersionspulver von vollsynthetischen Polymeren (Basispolymerisate). Grundsätzlich handelt es sich hierbei um Homo- und Copolymerisate von Vinylalkohol, Vinylestern, Styrol, Acrylsäureestern und Vinylchlorid.

Eine bevorzugte Ausführungsform einer Tapetenkleistermischungen ist mit folgenden Komponenten in Gew.-% gebildet:
- 40 % - 70 % mindestens eines handelsüblichen Celluloseethers, insbesondere Methylhydroxypropylcellulose und Methylhydroxyethylcellulose feinpulvrig, verzögert löslich eingestellt,
- 0,1 % - 6,0 % mindestens eines Hilfsmittels, insbesondere hydrophile Kieselsäure und wasserfreie Soda,
- 0,1 % - 10 % nach dem CTMP/TMP-Verfahren behandelte Cellulosefasern oder EFC-Fasern
- 20 % - 50 % mindestens eines redispergierbaren Dispersionspulvers, insbesondere von Homo-Polyvinylacetat

Die die vorgenannte Kleistermischung ergebende Stoffmischung sollte ein Schüttgewicht von 300 bis 600, insbesondere 400 bis 500 g/l nach DIN (ISO)697 aufweisen.

Eine Stoffmischung für eine Spachtelmasse kann mit folgenden Komponenten in Gew.-% gebildet sein:
- 70 % - 95 %, insbesondere 80 % - 90 % Gips (0,5 Hydrat)
- 5 % - 20 %, insbesondere 5 % - 10 % Füllstoffe, insbesondere Krist. Kreide
- 1 % - 15 %, insbesondere 5 % - 10 % nach dem CTMP/TMP-Verfahren behandelte Cellulosefasern oder EFC-Fasern
- 0 % - 3 %, insbesondere 0 % -1,0 % Celluloseether
- 0 % - 3 %, insbesondere 0 % - 0,5 % Stärkeether
- 0 % - 7 %, insbesondere 0,5 % - 3,0 % mindestens eines redispersierbaren Dispersionspulvers eines vollsynthetischen Polymeren.

Eine besonders bevorzugte Stoffmischung weist die Zusammensetzung nach Anspruch 7 auf.

Die Erfindung verkörpert sich gemäß Anspruch 8 auch in einem Verfahren zur Einbringung mindestens einer feinstteiligen Wirkstoffkomponente in ein flüssiges wässriges System und ist dann dadurch gekennzeichnet, daß die Wirkstoffkomponente mit einem Anteil an cellulosehaltigen Pflanzenfasern vermischt und diese Stoffmischung in eine feinstückige Form gebracht und in das flüssige wässrige System eingebracht wird.

Die Ansprüche 9 bis 13 geben die Merkmale der Erfindung als Verfahrensmerkmale wieder.

Eine weitere bevorzugte Ausführungsform besteht darin, daß die Stoffmischung eine Tapetenkleistermischung mit folgenden Komponenten (in Gew.-%) bildet:
- 40 % - 70 % mindestens eines handelsüblichen Celluloseethers, insbesondere Methylhydroxypropylcellulose und Methylhydroxyethylcellulose feinpulvrig, verzögert löslich eingestellt,
- 0,1 % - 6,0 %, mindestens eines Hilfsmittels, insbesondere hydrophile Kieselsäure und wasserfreie Soda,
- 0,1 % - 10 % nach dem CTMP/TMP-Verfahren behandelte Cellulosefasern
- 20 % - 50 % mindestens eines redispergierbaren Dispersionspulvers, insbesondere von Homo-Polyvinylacetat.

Das Schüttgewicht beträgt dabei vorzugsweise 400 - 500 g/l nach DIN (ISO) 697.
Eine andere bevorzugte Ausführungsform besteht darin, daß die Stoffmischung eine Spachtelmasse mit folgenden Komponenten (in Gew.-%) bildet:
- 70 % - 95 %, insbesondere 80 % - 90 % Gips (0,5 Hydrat)
- 5 % - 20 %, insbesondere 5 % - 10 % Füllstoffe, insbesondere Krist. Kreide
- 1 % - 15 %, insbesondere 5 % - 10 % nach dem CTMP/TMP-Verfahren behandelte Cellulosefasern oder EFC-Fasern
- 0 % - 3 %, insbesondere 0 % -1,0 % Celluloseether
- 0 % - 3 %, insbesondere 0 % - 0,5 % Stärkeether
- 0 % - 7 %, insbesondere 0,5 % - 2,0 % mindestens eines redispersierbaren Dispersionspulvers eines vollsynthetischen Polymeren.

### Versuchsergebnis:

Nachstehend wird ein Versuchsergebnis bei einem handelsüblichen Tapetenkleister wiedergeben. Das trockene Material wurde zwischen Walzen kompaktiert und gebrochen sowie auf zwei bis vier Millimeter abgesiebt. Als Faserzusatz wurde eine CTMP-Faser d50 (ca. 50 µm mittlerer Länge) verwendet. Der Preßdruck ist in Tonnen pro Zentimeter Walzenlänge des Kompaktierwalzwerks angegeben, die Faserzugabe in Gew.-%.

Die Zusammensetzung der zu kompaktierenden Stoffmischung entsprach Anspruch 7.

Das hieraus nach Mischen, Kompaktieren und Fraktionieren hergestellte Granulat wurde anschließend durch Einrühren in Wasser im Ansatzverhältnis 1 : 30 (ein Teil Pulver zu dreißig Teilen Wasser) zu einem gebrauchsfertigen Tapetenkleister aufgelöst.

Dabei ergab sich für das Auflöseverhalten folgendes:

| Lösezeit (sec) | Pressdruck (to/cm) | Faserzugabe (%) |
|---|---|---|
| | | |
| 80% nach 276 sec | 2 | 0 |
| 95,6% nach 90 sec | 2 | 5 |
| 99,9% nach 60 sec | 1,5 | 10 |

Es zeigt sich also, daß die Lösezeit bei hohem Preßdruck und ohne Faserzugabe mit Abstand am längsten ist. Eine Faserzugabe von 5 Gew.-% setzt bei gleichem Preßdruck die Lösezeit auf ein Drittel herab. Bei einer Faserzugabe von 10 Gew.-% kann der Preßdruck von 2 auf 1,5 t pro Zentimeter Walzenlänge erniedrigt werden und ergibt sich dennoch eine erneute Reduzierung der Lösezeit bei gleichzeitiger Vervollständigung der Lösung.

Ein weiterer wichtiger Aspekt ist, daß trotz der durch die Faserzugabe verringerten Lösezeit die granulierte Stoffmischung überraschend abriebstabil ist. In dem beigefügten Diagramm sind die Ergebnisse eines Abriebtests wiedergegeben. Das Granulat wurde im Ausgangszustand einer Siebanalyse unterzogen. Dabei ergab sich die im Diagramm untere, gestrichelt wiedergegebene Korngrößenverteilung. Sodann wurde das Granulat auf einem Vibrationsgerät (IKA oder Retsch) über 300 Sekunden mit 40 Hz vibriert. Die anschließende erneute Siebanalyse führte zu der im Diagramm ausgezogen wiedergegebene Kurve. Der Anteil der Granulatkörper oberhalb einer bestimmten Größe hat nur wenig abgenommen, d. h. die Kurve liegt nur wenig über der gestrichelten Ausgangskurve. Die Vibration hat also nur eine geringfügige Kornverkleinerung ergeben, die Körner sind nur wenig abgerieben worden. Dies dürfte auf die zusammenhaltsfördernde Oberflächenstruktur der Pflanzenfasern zurückzuführen sein, die durch die Vorbehandlung (TMP, CTMP, EFC) erzielt wird.

Bei der Herstellung von Verdickungen für die Textil- und Druckindustrie werden häufig mehrere Sorten von Cellulose- und Stärkeethern in Vergesellschaftung mit Polymerverdickern zur Erzielung bestmöglicher Verdickungseffekte kombiniert. Hier besteht die Gefahr der Entmischung der verschiedenen Rohstoffe, wenn sie nicht durch feinstteiliges Mahlen in Schüttgewicht und Kornverteilung untereinander möglichst angenähert werden. Derartige feinstteilige Wirkstoffkomponenten bei Verdickern sind schwer in die Flüssigkeit bzw. das Wasser einzumischen. Je nach dem wie schnell sich die verdikkende Wirkung einstellt, entstehen Klümpchen umgeben von einer in Quellung befindlichen Gelschicht, die weiteren Wasserzutritt verhindert. Das elastische Verhalten der Gelumhüllung erschwert das Dispergieren mittels hochscherender Mischsysteme und unnötig lange Mischzeiten mit hohem teilweise produktschädlichen Scherfeld sind die Folge.

Auch an dem Beispiel der Verdickungen sind die Vorteile der Erfindung erkennbar. Die feinstteiligen Wirkstoffkomponenten werden durch die Überführung in feinstückige Formkörper in ein leicht einrührbares Granulat umgewandelt. Dies hat auch den Vorteil, in Schüttgewicht und Korngröße und- form unterschiedliche Wirkstoffkomponenten in rieselfähiger Trockenlieferform so aneinander zu binden, daß eine Entmischung unmöglich gemacht wird.

Durch den Zusatz an cellulosehaltigen Pflanzenfasern wird eine verbesserte Bindung der feinstteiligen Wirkstoffkomponenten und somit eine verbesserte Stabilität des Granulats beobachtet, ohne daß der Preßdruck erhöht werden müßte.

Die cellulosehaltigen Pflanzenfasern sorgen ferner dafür, daß der Zerfall der Granulate nach dem Einbringen in die Flüssigkeit erheblich beschleunigt wird. Die feinstückigen Formkörper desintegrieren schneller als die einsetzende Gelbildung in den Einzelpartikeln. Unterstützen können dies Zusatzstoffe in der Stoffmischung wie flüssigkeitsfreundliche Netzmittel oder dergleichen.

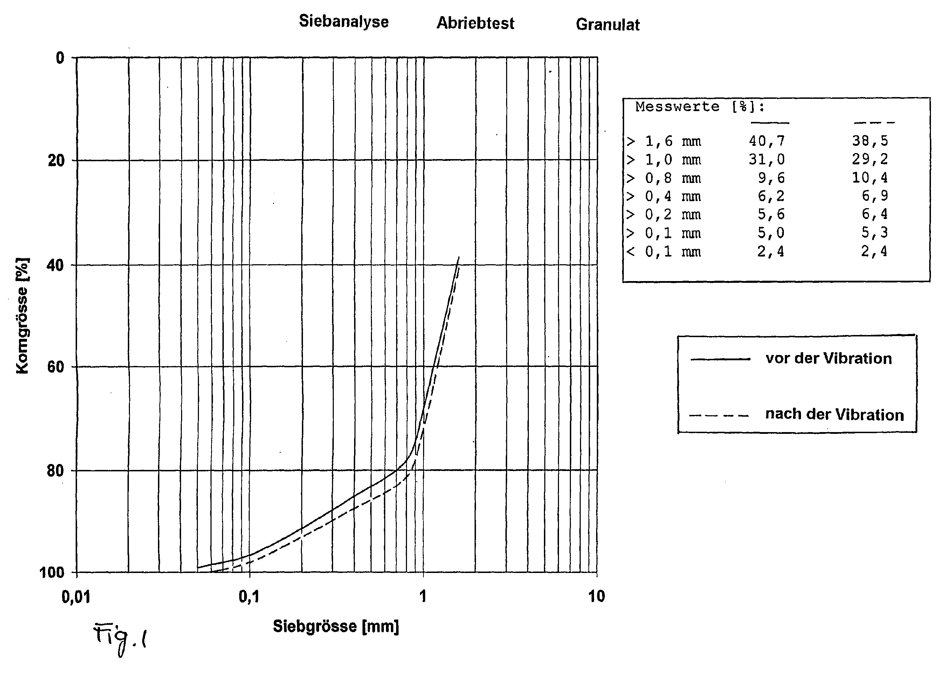

## Patentansprüche

1. Stoffmischung, die zur Einbringung in ein flüssiges wässriges System bestimmt ist und mindestens eine feinstteilige Wirkstoffkomponente umfaßt, die zur anschließenden Lösung oder Dispergierung in dem flüssigen wässrigen System bestimmt ist, **dadurch gekennzeichnet, daß** sie einen Anteil an cellulosehaltigen Pflanzenfasern umfaßt, die nach dem TMP-Verfahren, dem CTMP-Verfahren oder dem EFC-Verfahren chemisch oder physikalisch vorbehandelt sind, und in feinstückiger Form (granuliert oder pelletisiert) vorliegt.

2. Stoffmischung nach Anspruch 1, **dadurch gekennzeichnet, daß** die cellulosehaltigen Pflanzenfasern in der Stoffmischung in einem Gewichtsanteil von 2 bis 18% zugegen sind.

3. Stoffmischung nach Anspruch 1 oder 2, **dadurch gekennzeichnet, daß** die cellulosehaltigen Pflanzenfasern mittlere Faserlängen im Bereich von 20 bis 350 µm aufweisen.

4. Stoffmischung nach Anspruch 1 bis 3, **dadurch gekennzeichnet, daß** sie einen Anteil an Zusatzstoffen enthält, die die Wirkung der Wirkstoffkomponenten und/oder das Verhalten der Wirkstoffkomponenten in der Stoffmischung verbessern.

5. Stoffmischung nach einem der Ansprüche 1 bis 4, **dadurch gekennzeichnet, daß** das flüssige wässrige System Wasser ist.

6. Stoffmischung nach einem der Ansprüche 1 bis 5, **dadurch gekennzeichnet, daß** die feinstteilige Wirkstoffkomponente
- ein Tapetenkleister (Celluloseether, Stärkeether),
- ein Verdickungsmittel (Stärkeether, mit und ohne Kunstharzsätze),
- ein Wandbelagklebstoff (kaltwasserlösliche Stärken),
- Dispersionspulver,
- ein zementäres System (Ausgleichsmasse, Fliesenkleber),
- ein Fußbodenbelagsklebstoff,
oder
- eine insbesondere gipsbasierte Spachtelmasse oder ein solches Estrichsystem ist.

7. Stoffmischungen nach einem der Ansprüche 1 bis 5, **gekennzeichnet durch** folgende Zusammensetzung:
- 40 bis 95 Gew.-% mindestens eines wasserlöslichen bzw. wasserquellbaren Polysaccharids,
- 0,1 bis 20 Gew.-% mindestens einer nach dem TMP-, CTMP- oder EFC-Verfahren vorbehandelten cellulosehaltigen Pflanzenfaser,
- 0 bis 45 Gew.% mindestens eines redispergierbaren Dispersionspulvers eines vollsynthetischen Polymeren,
- 1 bis 15 Gew.-% mindestens eines Zusatzstoffes wie Antiblockmittel, Füllstoff, pH-Regulator, Farbstoff.

8. Verfahren zur Einbringung mindestens einer feinstteiligen Wirkstoffkomponente in ein flüssiges wässriges System, **dadurch gekennzeichnet, daß** die Wirkstoffkomponenten mit einem Anteil an cellulosehaltigen Pflanzenfasern vermischt werden die nach dem TMP-Verfahren, dem CTMP-Verfahren oder den EFC-Verfahren chemisch oder physikalisch vorbehandelt sind, und diese Stoffmischung in eine feinstückige Form gebracht (granuliert oder pelletisiert) und so in das flüssige wässrige System eingebracht wird.

9. Verfahren nach Anspruch 8, **dadurch gekennzeichnet, daß** die cellulosehaltigen Pflanzenfasern in der Stoffmischung in einem Gewichtsanteil von 2 bis 18% zugegen sind.

10. Verfahren nach Anspruch 8 oder 9, **dadurch gekennzeichnet, daß** die cellulosehaltigen Pflanzenfasern mittlere Faserlängen im Bereich von 20 bis 350 Mikrometer aufweisen.

11. Verfahren nach einem der Ansprüche 8 bis 10, **dadurch gekennzeichnet, daß** die Stoffmischung einen Anteil an Zusatzstoffen enthält, die die Wirkung der Wirkstoffkomponenten und/oder das Verhalten der Wirkstoffkomponenten in der Stoffmischung verbessern.

12. Verfahren nach einem der Ansprüche 8 bis 11, **dadurch gekennzeichnet, daß** das flüssige wässrige System Wasser ist.

13. Verfahren nach einem der Ansprüche 8 bis 12, **dadurch gekennzeichnet, daß** die feinstteilige Wirkstoffkomponente
- ein Tapetenkleister (Celluloseether, Stärkeether),
- ein Verdickungsmittel (Stärkeether, mit und ohne Kunstharzsätze),
- ein Wandbelagklebstoff (kaltwasserlösliche Stärken),
- Dispersionspulver,
- ein zementäres System (Ausgleichsmasse, Fliesenkleber),
- ein Fußbodenbelagsklebstoff,
oder
- eine insbesondere gipsbasierte Spachtelmasse oder ein solches Estrichsystem ist.

## Claims

1. Blend intended for introduction into a liquid aqueous system and comprising at least one extremely finely divided active substance component that is intended for subsequent dissolution or dispersion in the liquid aqueous system, **characterised in that** it comprises a proportion of cellulose-containing plant fibres that have been chemically or physically pre-treated using the TMP process, the CTMP process or the EFC process, and that are present in finely divided form (granulated or pelletised).

2. Blend according to claim 1, **characterised in that** the cellulose-containing plant fibres are present in a percentage by weight of 2 to 18% in the blend.

3. Blend according to claim 1 or 2, **characterised in that** the cellulose-containing plant fibres have average fibre lengths in the range of 20 to 350 µm.

4. Blend according to claim 1 to 3, **characterised in that** it contains a proportion of additives that improve the action of the active substance components and/or the characteristics of the active substance components in the blend.

5. Blend according to any one of claims 1 to 4, **characterised in that** the liquid aqueous system is water.

6. Blend according to any one of claims 1 to 5, **characterised in that** the extremely finely divided active substance component is
- a wallpaper paste (cellulose ether, starch ether),
- a thickener (starch ether without and without synthetic resins),
- a wall covering adhesive (cold water-soluble starches),
- dispersion powders;
- a cement-like system (balancing compound, floor tile adhesive),
- a floor covering adhesive,
or
- an in particular gypsum-based filler or floor finish system of this type.

7. Blends according to any one of claims 1 to 5, **characterised by** the following composition:
- 40 to 95 % by weight of at least one polysaccharide that is capable of dissolving or swelling in water;
- 0.1 to 20 % by weight of at least one cellulose-containing plant fibre that has been pre-treated using the TMP, CTMP or EFC process;
- 0 to 45 % by weight of at least one redispersable dispersion powder of a fully synthetic polymer; and
- 1 to 15 % by weight of at least one additive, such as anti-blocking agent, filler, pH adjuster or a dye.

8. Process for introducing at least one extremely finely divided active substance component into a liquid aqueous system, **characterised in that** the active substance components are mixed with a proportion of cellulose-containing plant fibres which have been chemically or physically pre-treated using the TMP, CTMP or EFC process, and this blend is brought into a finely divided form (granulated or pelletised) and is thus introduced into the liquid aqueous system.

9. Process according to claim 8, **characterised in that** the cellulose-containing plant fibres are present in the blend in a proportion by weight of 2 to 18%.

10. Process according to claim 8 or 9, **characterised in that** the cellulose-containing plant fibres have average fibre lengths in the range of 20 to 350 micrometers.

11. Process according to any one of claims 8 to 10, **characterised in that** the blend includes a proportion of additives that improve the action of the active substance components and/or the characteristics of the active substance components in the blend.

12. Process according to any one of claims 8 to 11, **characterised in that** the liquid aqueous system is water.

13. Process according to claim 8 to 12, **characterised in that** the extremely finely divided active substance component is
- a wallpaper paste (cellulose ether, starch ether),
- a thickener (starch ether without and without synthetic resins),
- a wall covering adhesive (cold water-soluble starches),
- dispersion powders;
- a cement-like system (balancing compound, floor tile adhesive),
- a floor covering adhesive,
or
- an in particular gypsum-based filler or floor finish system of this type.

## Revendications

1. Mélange de substances destiné à être incorporé dans un système aqueux liquide et qui renferme au moins un composant actif très finement dispersé destiné à être ensuite dissous ou dispersé dans le système aqueux liquide,
**caractérisé en ce qu'**
il renferme une fraction de fibres végétales cellulosiques préalablement traitées par voie chimique ou physique selon les procédés TMP, CTMP ou EFC et se présente sous forme de petits morceaux (granulé ou pellétisé).

2. Mélange de substances selon la revendication 1,
**caractérisé en ce que**
les fibres végétales cellulosiques sont présentes, dans le mélange de substances, dans une fraction pondérale de 2 à 18 %.

3. Mélange de substances selon la revendication 1 ou la revendication 2,
**caractérisé en ce que**
les fibres végétales cellulosiques ont des longueurs moyennes de l'ordre de 20 à 350 µm.

4. Mélange de substances selon les revendications 1 à 3,
**caractérisé en ce qu'**
il contient une fraction d'additifs qui améliorent l'action des composants actifs et/ou le comportement des composants actifs dans le mélange de substances.

5. Mélange de substances selon l'une quelconque des revendications 1 à 4,
**caractérisé en ce que**
le système aqueux liquide est de l'eau.

6. Mélange de substances selon l'une quelconque des revendications 1 à 5,
**caractérisé en ce que**
le composant actif très finement dispersé est
- une colle pour papier peint (éther cellulosique, éther d'amidon),
- un épaississant (éther d'amidon, avec et sans sédiment de résine artificielle),
- une colle pour revêtement mural (amidons solubles dans l'eau froide),
- une poudre de dispersion,
- un système cimentaire (masse de compensation, colle pour carrelage),
- une colle pour revêtement de sol,
ou
- un mastic, en particulier à base de plâtre, ou un tel système de lissage.

7. Mélanges de substances selon l'une quelconque des revendications 1 à 5,
**caractérisés par** la composition suivante :
- 40 à 95 % en poids au moins d'un polysaccharide soluble dans l'eau ou pouvant gonfler dans 'l'eau,
- 0,1 à 20 % en poids d'au moins une fibre végétale cellulosique préalablement traitée avec le procédé TMP, CTMP ou EFC,
- 0 à 45 % en poids d'au moins une poudre de dispersion redispersable d'un polymère entièrement synthétique,
- 1 à 15 % en poids d'au moins un additif comme un antiadhérent, une charge, un régulateur de pH, un colorant.

8. Procédé d'introduction d'au moins un composant actif très finement dispersé dans un système aqueux liquide,
**caractérisé en ce que**
les composants actifs sont mélangés à une fraction de fibres végétales cellulosiques préalablement traitées par voie chimique ou physique par le procédé TMP, le procédé CTMP ou le procédé EFC et ce mélange de substances est transformé en petits morceaux (granulé ou pellétisé) et introduit ainsi dans le système aqueux liquide.

9. Procédé selon la revendication 8,
**caractérisé en ce que**
les fibres végétales cellulosiques sont présentes, dans le mélange de substances, dans une fraction pondérale de 2 à 18 %.

10. Procédé selon la revendication 8 ou la revendication 9,
**caractérisé en ce que**
les fibres végétales cellulosiques présentent des longueurs de fibres moyennes de l'ordre de 20 à 350 micromètres.

11. Procédé selon l'une quelconque des revendications 8 à 10,
**caractérisé en ce que**
le mélange de substances contient une fraction d'additifs qui améliorent l'action des composants actifs et/ou le comportement des composants actifs dans le mélange de substances.

12. Procédé selon l'une quelconque des revendications 8 à 11,
**caractérisé en ce que**
le système aqueux liquide est de l'eau.

13. Procédé selon l'une quelconque des revendications 8 à 12,
**caractérisé en ce que**
le composant actif très finement dispersé est
- une colle pour papier peint (éther cellulosique, éther d'amidon),
- un épaississant (éther d'amidon, avec et sans sédiment de résine artificielle),
- une colle pour revêtement mural (amidons solubles dans l'eau froide),
- une poudre de dispersion,
- un système cimentaire (masse de compensation, colle pour carrelage),
- une colle pour revêtement de sol,
ou
- un mastic, en particulier à base de plâtre, ou un tel système de lissage.
